# EUROPEAN PATENT SPECIFICATION

(11) **EP 3 593 971 B1**
(45) Date of publication and mention of the grant of the patent: **25.01.2023**
(21) Application number: 19020424.8
(22) Date of filing: 09.07.2019
(51) Int. Cl.: C04B 28/14, B28B 15/00, B28B 23/00, B28C 9/00

(54) **PRODUCTION LINE FOR BUILDING PANELS FOR INTERIOR CONSTRUCTION OF RESIDENTIAL AND INDUSTRIAL PREMISES**
FERTIGUNGSLINIE FÜR BAUPLATTEN FÜR DEN INNENAUSBAU VON WOHN- UND GEWERBEFLÄCHEN
LIGNE DE PRODUCTION DE PANNEAUX DE CONSTRUCTION POUR L'AMÉNAGEMENT INTÉRIEUR DE LOCAUX RÉSIDENTIELS ET INDUSTRIELS

(30) Priority: 11.07.2018 BG 406418
(43) Date of publication of application: 15.01.2020
(73) Proprietor: Andreevska - Djambazova, Evgenia Georgieva, 1527 Sofia (BG)
(72) Inventor: Andreevska - Djambazova, Evgenia Georgieva, 1527 Sofia (BG)
(74) Representative: Manev, Kostadin Chanev

(56) References cited:
- CN-A- 105 236 905
- US-A1- 2009 283 018
- US-A1- 2011 040 027
- US-B1- 9 222 268

## Description

### TECHNICAL FIELD

The present invention relates to a production line for building panels for interior construction of residential and industrial premises which will be used both in the glass and textile waste processing industry and in the construction and assembly works for interior construction of spaces, as well as repair restoration works in residential or industrial premises.

### BACKGROUND

In practice there are plants for the separation and processing of collected waste types, in particular of flat glass waste, of glass package and containers waste, and of textile waste for recycling and recovery as waste.

Textile wastes are generally two types - waste that comes from the production of textiles and wastes that are produced after the textiles have reached the end users - all kinds of old clothes and other household goods made of textiles. Textile waste accounts for a significant percentage of total household waste. The most common use of textile waste is through its recycling.

Glass waste before re-use is first crushed in hammer, rotor or roller mills as well as jaw crushers. Glass packages or containers waste subsequently used for the new production of glass packages and containers are most often recycled by melting after pre-sorting according to their colour and use.

CN105236905A Autoclave aerated concrete block produced from waste glass and production method thereof - the invention provides an autoclave aerated concrete block produced from waste glass and a production method thereof. The concrete block is prepared from desert fine sand, cement, quicklime, waste glass and aluminum powder paste. The main preparation steps include: (1) grinding the desert fine sand and waste glass into powder by a ball mill, and conducting beating with a beater for standby use; (2) crushing the quicklime with a crusher, and then performing grinding into powder by the ball mill; (3) putting the beat desert fine sand and waste glass powder, the ball milled quicklime, cement and aluminum powder paste in a stirrer, adding water and stirring the materials fully, thus obtaining a mixture; (4) casting the mixture in a mold, performing initial setting to obtain a large block blank; (5) cutting the large block blank, and then conducting static maintenance; and (6) performing autoclave curing, thus obtaining the product concrete block at the end.

### SUMMARY

The task of the present invention has been to create a production line for building panels for interior construction of residential and industrial premises which will ensure the re-use of flat glass and textile waste by incorporating them in the production of a construction product.

The problem is solved by creating a production line for building panels for interior construction of residential and industrial premises, which includes a production line for glass flour and a production line for textile noil.

The glass flour production line includes a receiving hopper connected to a hammer mill, which is connected by a conveyor to a roll mill with a sieve. The roller mill with a sieve on its side by means of a conveyor is connected to a glass flour container.

The textile noil production line includes a station for baled or packaged textile waste which is sequentially and functionally connected by conveyors with a drying chamber, a UV decontamination drum, a shredder, a feathering machine, and a textile noil container.

The glass flour container by conveyor is connected to a hopper with a glass flour dispenser connected by a conveyor with a homogenizer. The conveyor for textile noil by means of a conveyor is connected to a hopper with a textile noil dispenser connected by a conveyor to the homogenizer. To the homogenizer, a water dispenser pump, a hopper with a plaster dispenser and a hopper with a granular silicone dispenser are also connected. The homogenizer by a conveyor is connected with at least three upper press vibratory sieves connected to the dryer.

An advantage of the established production line is that it provides for real recovery of flat glass waste and textile waste which, after processing through the production line, is used in building panels used for construction and assembly work in residential or industrial premises to achieve the soundproofing and thermal insulation effect. Additionally, the production line has high-precision technology process, high throughput and efficiency while maintaining maximum reliability and security and at the same time offering minimal opportunities for defective production and waste.

### BRIEF DESCRIPTION OF THE DRAWING

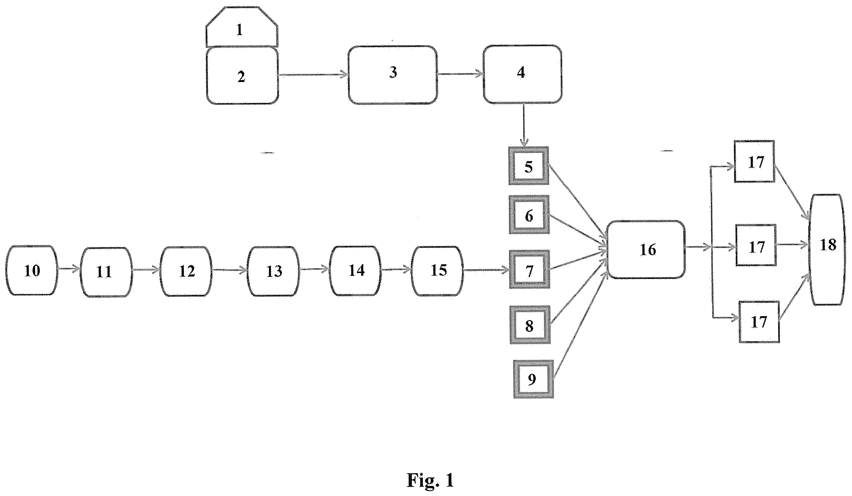

This present invention is illustrated in Figure 1, which is a schematic flow chart for the production of building panels for interior construction of residential and industrial premises.

### DETAILED DESCRIPTION

The established production line for building panels for interior construction of residential and industrial premises as shown in Figure 1 includes a production line for glass flour and a production line for textile noil.

The glass flour production line includes receiving hopper 1 connected to hammer mill 2 which is connected by a conveyor to roll mill with sieve 3 which in turn is connected by a conveyor to glass flour container 4.

The textile noil production line includes a station for baled or packaged textile waste 10 which is sequentially and functionally connected by conveyors with drying chamber 11, UV decontamination drum 12, shredder 13, feathering machine 14, and textile noil container 15.

The glass flour container 4 by a conveyor is connected to hopper with glass flour dispenser 5 connected by a conveyor with homogenizer 16 and the textile noil container 15 by means of a conveyor is connected to hopper with textile noil dispenser 7 connected by a conveyor to the homogenizer 16. To the homogenizer 16, water dispenser pump 6, hopper with plaster dispenser 8 and hopper with a granular silicone dispenser 9 are also connected. The conveyor homogenizer 16 is connected to at least three upper press vibratory sieves 17 connected to the dryer 18.

The established production line according to the utility model is used as follows.

On the one hand, the flat glass waste is placed in the receiving hopper 1 from where it enters the hammer mill 2 for crushing. The hammer mill 2 performs the grinding of the flat glass by the impact of high speed swinging hammers as well as the impact on the reflective plates of the material thrown by the hammers. The crushed flat glass particles pass through the roller mill 3 where continuous grinding of the waste glass is accomplished by crushing and grinding between two cylindrical shafts which rotate opposite each other. Smooth, jagged or longitudinally ribbed shafts are used. In the roller mill with sieve 3, by adjusting the distance between the shafts and the respective sieve, a particle size of the resulting glass flour is achieved - from 1 mm to 1.5 mm. All larger particles are returned for re-grinding. The resulting material in the form of glass flour is temporarily stored in the metal closed glass flour container 4.

On the other hand, textile waste is pre-sorted mechanically according to the type of material - cotton, wool, mixed fabrics or artificial fabrics. Artificial tissues are released as waste and are not used for processing in the production line because of their low melting temperature and low moisture. The sorted and recyclable textile materials are baled and/or packaged and fed to the station for baled or packaged textile waste 10. By means of a chevron belt conveyor the textile wastes enter the drying chamber 11 where, by means of warm air, ventilation and aspiration of moisture maximum moisture content in the material of 10 to 15% is achieved. The dried material by a closed conveyor belt is fed for UV decontamination into the UV decontamination drum 12. Once decontaminated, the textile material is crushed to pieces of size from 5 mm to 1.5 cm by means of the shredder 13. The shredder 13 is a pneumatic guillotine, in which the processed fabric is pre-pressed by vacuum, mechanically pressed and cut into pieces of predetermined size. The cut textile material is de-structured in the feathering machine 14 which includes needle-shaped shaft assemblies which achieve textile fibre sizes in the order of 5 mm to 1 cm long and 0.8 to 1 mm wide. The already dewatered, dried and decontaminated textile material, which is a textile noil, passes through a rubber-belt conveyor into the metal closed textile noil container 15.

In the manufacture of building panels for interior construction of residential and industrial premises, the resulting glass flour and the resulting textile noil are fed into the hopper with glass flour dispenser 5 and the hopper with textile noil dispenser 7 and together with the corresponding dispensed amounts of water and gypsum as the basic structural element, simultaneously through conveyors, enter the homogenizer 16. After mixing the ingredients to obtain a homogeneous product, a continuous rotation in the homogenizer 16 adds granular industrial silicone from the hopper with granular silicone dispenser 9 to achieve moisture resistance of the produced panels. An exemplary ratio of the materials used is: glass flour - 10 %; textiles - 20 %; gypsum and water - 65 % and silicone granules - 5 %. After remixing and homogenizing, the resulting mixture is drained and poured onto at least three vibrating sieves 17 to drain excess water and pressed with an overpressure to force the water out and to compact the structural composition of the resulting "raw" panels. Vibrating sieves with upper press 17 have holes size of 1 to 1.5 mm. After compression, the resulting "raw" panels enter the dryer 18 where they are dried by forced ventilation and temperature up to 45 °C. After drying, the building panels are covered with a paper backing of recycled paper.

All conveyors used in the production lines are rubber belt conveyors.

The operation of the entire production line is provided by electric motor reduction gears with automatic control. The movement of the rubber belt conveyors is provided by mechanical rollers and rubber-band.

## Claims

1. **A production line for building panels for interior construction of residential and industrial premises,** comprises a glass flour production line, which including receiving hopper (1) connected to hammer mill (2) which is connected by means of a conveyor to roll mill with sieve (3), which in turn is connected by means of a conveyor to glass flour container (4), wherein the glass flour container (4) is connected by a conveyor to hopper with glass flour dispenser (5) connected by means of a conveyor with homogenizer (16), such as water dispensing pump (6), **characterized in that** the production line comprises and a textile noil production line, which including station of baled or packaged textile waste (10), which is sequentially and functionally connected by means of conveyors with drying chamber (11), UV decontamination drum (12), shredder (13), feathering machine (14) and container for textile noil (15), wherein the container for textile noil (15) by means of a conveyor is connected to hopper with textile noil dispenser (7) connected by a conveyor to the homogenizer (16), wherein hopper with gypsum dispenser (8) and hopper for granular silicone (9) are connected to the homogenizer (16), wherein the homogenizer (16) by conveyors is connected to at least three vibratory sieves with an upper press (17) connected to the dryer (18),

## Patentansprüche

1. **Fertigungslinie für Bauplatten für den Inneneinbau von Wohn- und Gewerbeflächen,** umfassende einen Fließband für Glasmehlherstellung, bestehend aus einem Beschickungsbunker (1), verbunden mit einer Hammermühle (2), welche durch einen Fließförderer mit einer Walzenmühle mit Sieb (3) verbunden ist, welche ihrerseits durch einen Fließförderer mit einem Behälter für Glasmehl (4) verbunden ist, wobei der Behälter für Glasmehl (4) durch einen Fließförderer mit einem Bunker mit Dosiereinrichtung für Glasmehl (5) ist, der durch einen Fließförderer mit Homogenisierungseinrichtung (16) verbunden ist, sowie eine Dosierwasserpumpe (6), **gekennzeichnet dadurch, dass** die Fertigungslinie auch eine Fließbandstraße für Herstellung vom Kämmling umfasst, welche aus Station für in Ballen gepressten oder gestapelten Textillabfälle (10), die hintereinander und funktionell durch Fließförderer mit einer Trocknungskammer (11) geschaltet ist, mit einem Trommel für UV-Entkeimung (12), mit Zerkleinerungsguillotine (13), mit einer Auskrempelmaschine (14) und mit Behälter für Kämmling (15), der durch einen Fließförderer mit einem Bunker mit Dosiereinrichtung für Kämmling (7) verbunden ist, der durch Fließförderer mit der Homogenisierungseinrichtung (16) verbunden ist, mit welcher Homogenisierungseinrichtung (16) auch ein Bunker mit Dosiereinrichtung für Gips (8) und ein Bunker mit Dosiereinrichtung für granuliertes Silikon (9) verbunden sind, indem die Homogenisierungseinrichtung (16) durch Fließförderer mit mindestens drei Schwingsiebe mit Oberpresse (17) verbunden ist, verbunden mit einem Trockner (18), besteht.

## Revendications

1. **Ligne de production de panneaux de construction pour l'aménagement intérieure de locaux résidentiels et industriels,** comprenant une ligne de production de farine de verre, qui inclut une trémie de réception (1) reliée à un broyeur à marteaux (2) qui est relié au moyen d'un convoyeur à un broyeur à cylindres avec un tamis (3), qui à son tour est relié au moyen d'un convoyeur à un récipient de farine de verre (4), le récipient de farine de verre (4) est relié par un convoyeur à une trémie avec un distributeur de farine de verre (5) relié au moyen d'un convoyeur à un homogénéisateur (16), tel qu'une pompe de distribution d'eau (6), **caractérisé en ce que** la ligne de production comprend et une ligne de production du textile déchiqueté en petits morceaux, qui comprend une station de déchets textiles en balles ou emballés (10), qui est séquentiellement et fonctionnellement connectée au moyen de convoyeurs avec une chambre de séchage (11), un tambour de décontamination UV (12), un déchiqueteur (13), une machine à plumer (14) et un récipient pour les déchets textiles (15), dans lequel le conteneur pour les déchets textiles (15) est relié au moyen d'un convoyeur à une trémie avec un distributeur des déchets textiles (7) relié par un convoyeur à l'homogénéisateur (16) ; la trémie avec le distributeur de gypse (8) et la trémie pour le silicone granulaire (9) sont reliées à l'homogénéisateur (16) ; l'homogénéisateur (16) est relié par des convoyeurs à au moins trois tamis vibrants avec une presse supérieure (17) reliée au séchoir (18).
